(19) Europäisches Patentamt
European Patent Office
Office européen des brevets

(11) EP 3 134 259 B1

# (12) EUROPEAN PATENT SPECIFICATION

(45) Date of publication and mention of the grant of the patent:
**28.11.2018 Bulletin 2018/48**

(21) Application number: **15732043.3**

(22) Date of filing: **20.04.2015**

(51) Int Cl.:
***B32B 7/12*** *(2006.01)*

(86) International application number:
**PCT/IB2015/052885**

(87) International publication number:
**WO 2015/162546 (29.10.2015 Gazette 2015/43)**

## (54) ULTRAVIOLET CURABLE TRANSFER COATING FOR APPLYING NANOMETER SIZED METAL PARTICLES TO POLYMER SURFACE

UV-HÄRTBARE ÜBERTRAGUNGSBESCHICHTUNG ZUM AUFBRINGEN VON METALLPARTIKELN IN NANOMETERGRÖSSE AUF EINE POLYMEROBERFLÄCHE

REVÊTEMENT DE TRANSFERT DURCISSABLE PAR ULTRAVIOLETS PERMETTANT D'APPLIQUER DES NANOPARTICULES MÉTALLIQUES À UNE SURFACE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2014 US 201461982703 P**

(43) Date of publication of application:
**01.03.2017 Bulletin 2017/09**

(73) Proprietor: **SABIC Global Technologies B.V.**
**4612 PX Bergen op Zoom (NL)**

(72) Inventors:
- **XU, Yuzhen**
  **Shanghai 201319 (CN)**
- **FENG, Wei**
  **Shanghai 201319 (CN)**
- **CHEN, Zhe**
  **Shanghai 201319 (CN)**
- **LAI, Hengjie**
  **Shanghai 201319 (CN)**
- **YANG, Li**
  **Shanghai 201319 (CN)**
- **CHEN, Jing**
  **Shanghai 201319 (CN)**

(74) Representative: **Balder IP Law, S.L.**
**Castellana 93**
**28046 Madrid (ES)**

(56) References cited:
**EP-A2- 2 477 230**
**CN-A- 1 632 019**
**US-A1- 2012 098 419**
**US-A1- 2013 136 874**
**US-A1- 2014 008 115**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND

Conductive coatings can be useful in a variety of electronic devices. These coatings can provide a number of functions such as electromagnetic interference shielding and electrostatic dissipation. These coatings can be used in many applications include, but not limited to, touch screen displays, wireless electronic boards, photovoltaic devices, conductive textiles and fibers, organic light emitting diodes, electroluminescent devices, and electrophoretic displays, such as e-paper.

CN1632019A discloses in example 3 (table 4) an ultraviolet curable paint for transfer of coating comprising 55% by weight of EB270, which is an aliphatic polyurethane acrylate; 38% by weight of acrylate monomers (TMPTA, HEA, PEA) and 5% by weight of a photo-initiator.

US2013/136874A1 discloses an optical assembly is provided that includes a display panel, a substantially transparent substrate and an adhesive composition. The adhesive composition includes the reaction product of a miscible blend that includes one or more (meth)acrylate monomer, one or more multifunctional (meth)acrylate oligomer and one or more free-radical generating photo-initiator. The one or more multifunctional (meth)acrylic oligomer includes an acrylic oligomer derived from (meth)acrylate monomers that is not substantially bonded to the adhesive composition after it has been cured by exposure to actinic radiation. Also provide is a method of making the optical assembly and a tape that includes a backing and the provided adhesive composition that has been cured.

US2012/098419A1 discloses in Fig. 1b a transparent electrode comprising a substrate, a conductive layer, and between the substrate and conductive layer a binder layer. The binder layer or adhesive agent has transferability. The adhesive agent comprises a UV-curable resin or an electron beam curable resin. A polymerizable monomer may additionally be used (e.g. butyl acrylate). The resin preferably comprises acrylic urethane type resin as a main component, i.e. more than 50% by weight based on the adhesive agent. Further, the conductive layer comprises metal nanoparticles (e.g. Ag) in a three-dimensional conductive network. The surface resistivity is given with 10 Ohm/sq (e.g. TC-3, Table 1) as measured according to JISK 7194:1994. The transparent electrode (TC-3) is obtained by a method comprising the steps of providing a PET film as release liner and coating it with the conductive layer comprising the silver nanowire network structure; applying an UV-curable transparent resin as an adhesion layer on a PET film; laminating the PET film coated with the adhesive with the PET liner coated with the conductive layer; subjecting the laminate to UV radiation and curing the adhesion layer; separating the PET release liner from the laminate.

Conductive coatings can include a network-like pattern of conductive traces formed of metal. The conductive coating can be applied to a substrate as a wet coating which can be sintered to form these networks. However, some substrate materials can be damaged by a sintering process.

Thus, there is a need in the art for a transfer coating which can provide strong adhesion between a conductive coating and a substrate.

### BRIEF DESCRIPTION

An ultraviolet curable transfer coating comprises: a multifunctional acrylate oligomer; and an acrylate monomer; wherein the ultraviolet curable transfer coating includes a total weight, wherein 30 % to 80 % of the total weight comprises the multifunctional acrylate oligomer, and wherein 15 % to 65% of the total weight comprises the acrylate monomer; wherein the ultraviolet curable transfer coating can adhere to a polycarbonate substrate with an adhesion strength of greater than or equal to 3B as measured according to ASTM 3359.

A conductive sheet or film comprising: a substrate including a first surface and a second surface; an ultraviolet curable transfer coating according to the invention adhered to the first surface; and a conductive coating adjacent to the ultraviolet curable transfer coating, wherein the conductive coating includes nanometer sized metal particles arranged in a network, and wherein the conductive coating has a surface resistance of less than or equal to 0.1 ohm/sq; wherein the sheet or film has a pencil hardness of greater than or equal to H as measured according to ASTM D3363 using a Mitsubishi Uni pencil having a 1 kilogram loading and wherein the sheet or film has a haze of less than or equal to 6% as measured according to ASTM D1003 Procedure A using CIE standard illuminant C.

A method of making a conductive substrate comprising: applying an ultraviolet curable transfer coating according to the invention to a first surface of a recipient substrate or to a first surface of a donor substrate, wherein the first surface of the donor substrate includes a conductive coating coupled thereto; pressing the first surface of the recipient substrate and the first surface of the donor substrate together to form a stack, wherein the ultraviolet curable transfer coating is disposed therebetween; heating the stack; activating the ultraviolet curable transfer coating with an ultraviolet radiation source; removing the donor substrate from the stack leaving a conductive substrate; wherein the ultraviolet curable transfer coating remains adhered to the first surface of the recipient substrate and to the conductive coating; wherein the heating further comprises heating to greater than 70 °C.

The above described and other features are exemplified by the following figures and detailed description.

BRIEF DESCRIPTION OF THE DRAWINGS

Refer now to the figures, which are exemplary embodiments, and wherein the like elements are numbered alike.

FIG. 1 is an illustration of a cross-sectional view of a conductive sheet or film including a conductive coating transferred thereto.

FIG. 2 is an illustration of a cross-sectional view of a portion of a conductive sheet or film including a conductive coating transferred thereto and a coated substrate.

DETAILED DESCRIPTION

A problem to be solved can include applying a conductive coating which can be sintered to form a conductive metal network to a substrate which can be damaged by a sintering temperature (e.g. having a heat deflection temperature below the sintering temperature). The present subject matter can help provide a solution to this problem, such as by providing a transfer coating formulation and method of using the same, that is capable of transferring a conductive coating from one substrate to another after the conductive coating is sintered.

Disclosed herein is an ultraviolet (UV) light curable transfer coating, method of its use, and sheets or films having conductive coatings adhered to a surface using the transfer coating. The transfer coating can be disposed adjacent to a substrate. The transfer coating can be disposed between a conductive coating and a surface of a substrate. The transfer coating can adhere to the conductive coating and a surface of a substrate and can provide an adhesive force to hold the conductive coating adjacent to the substrate. The transfer coating can be sandwiched between the conductive coating and the substrate, such that it is disposed adjacent to a surface of a substrate on one side and the conductive coating on the other side. The substrate can include a substrate coating. The transfer coating can be adhered directly to a substrate surface. The transfer coating can be adhered to the surface of a coating which is adhered to the surface of the substrate.

The transfer coating can include a multifunctional acrylate oligomer and an acrylate monomer. The transfer coating can include a photoinitiator. The multifunctional acrylate oligomer can include an aliphatic urethane acrylate oligomer, a pentaerythritol tetraacrylate, an aliphatic urethane acrylate, an acrylic ester, a dipentaerythritol dexaacrylate, an acrylated resin, a trimethylolpropane triacrylate (TMPTA), a dipentaerythritol pentaacrylate ester, or a combination comprising at least one of the foregoing. In an embodiment, the multifunctional acrylate can include DOUBLEMER™ 5272 (DM5272) (commercially available from Double Bond Chemical Ind., Co., LTD., of Taipei, Taiwan, R.O.C.) which includes an aliphatic urethane acrylate oligomer in an amount from 30 weight percent (wt.%) to 50 wt.% of the multifunctional acrylate and a pentaerythritol tetraacrylate in an amount from 50 wt.% to 70 wt.% of the multifunctional acrylate.

The transfer coating can optionally include a polymerization initiator to promote polymerization of the acrylate components. The optional polymerization initiators can include photoinitiators that promote polymerization of the components upon exposure to ultraviolet radiation.

The transfer coating can include the multifunctional acrylate oligomer in an amount of 30 wt.% to 90 wt.% for example, 30 wt.% to 85 wt.%, or, 30 wt.% to 80 wt.%; the acrylate monomers in an amount of 5 wt.% to 65 wt.%, for example, 8 wt.% to 65 wt.%, or, 15 wt.% to 65 wt.%; and the optional photoinitiator present in an amount of 0 wt.% to 10 wt.%, for example, 2 wt.% to 8 wt.%, or, 3 wt.% to 7 wt.%, wherein weight is based on the total weight of the transfer coating.

An aliphatic urethane acrylate oligomer can include 2 to 15 acrylate functional groups, for example, 2 to 10 acrylate functional groups.

The acrylate monomer (e.g., 1,6-hexanediol diacrylate, meth(acrylate) monomer) can include 1 to 5 acrylate functional groups, for example, 1 to 3 acrylate functional group(s). In an embodiment, the acrylate monomer can be 1,6-hexanediol diacrylate (HDDA).

The multifunctional acrylate oligomer can include a compound produced by reacting an aliphatic isocyanate with an oligomeric diol such as a polyester diol or polyether diol to produce an isocyanate capped oligomer. This oligomer can then be reacted with hydroxy ethyl acrylate to produce the urethane acrylate.

The multifunctional acrylate oligomer can be an aliphatic urethane acrylate oligomer, for example, a wholly aliphatic urethane (meth)acrylate oligomer based on an aliphatic polyol, which is reacted with an aliphatic polyisocyanate and acrylated. In one embodiment, the multifunctional acrylate oligomer can be based on a polyol ether backbone. For example, an aliphatic urethane acrylate oligomer can be the reaction product of (i) an aliphatic polyol; (ii) an aliphatic polyisocyanate; and (iii) an end capping monomer capable of supplying reactive terminus. The polyol (i) can be an aliphatic polyol, which does not adversely affect the properties of the composition when cured. Examples include polyether polyols; hydrocarbon polyols; polycarbonate polyols; polyisocyanate polyols, and mixtures thereof.

The multifunctional acrylate oligomer can include an aliphatic urethane tetraacrylate (i.e., a maximum functionality of 4) that can be diluted 20% by weight with a acrylate monomer, e.g., 1,6-hexanediol diacrylate (HDDA), tripropyleneglycol diacrylate (TPGDA), and trimethylolpropane triacrylate (TMPTA). A commercially available urethane acrylate that can be used in forming the transfer coating can be EBECRYL™ 8405, EBECRYL™8311, or EBECRYL™ 8402, each of which is commercially available from Allnex.

Some commercially available oligomers which can be used in the transfer coating can include, but are not limited to, multifunctional acrylates that are part of the following families: the PHOTOMER™ Series of aliphatic urethane acrylate oligomers from IGM Resins, Inc., St. Charles, IL; the Sartomer SR Series of aliphatic urethane acrylate oligomer from Sartomer Company, Exton, Pa.; the Echo Resins Series of aliphatic urethane acrylate oligomers from Echo Resins and Laboratory, Versailles, Mo.; the BR Series of aliphatic urethane acrylates from Bomar Specialties, Winsted, Conn.; and the EBECRYL™ Series of aliphatic urethane acrylate oligomers from Allnex. For example, the aliphatic urethane acrylates can be KRM8452 (10 functionality, Allnex), EBECRYL™ 1290 (6 functionality, Allnex), EBECRYL™ 1290N (6 functionality, Allnex), EBECRYL™ 512 (6 functionality, Allnex), EBECRYL™ 8702 (6 functionality, Allnex), EBECRYL™ 8405 (3 functionality, Allnex), EBECRYL™ 8402 (2 functionality, Allnex), EBECRYL™ 284 (3 functionality, Allnex), CN9010™ (Sartomer), CN9013™ (Sartomer), SR351 (Sartomer)or Laromer TMPTA (BASF), SR399(Sartomer) dipentaerythritol pentaacrylate estersand dipentaerythritol hexaacrylate DPHA (Allnex), CN9010 (Sartomer).

Another component of the transfer coating can be an acrylate monomer having one or more acrylate or methacrylate moieties per monomer molecule. The acrylate monomer can be mono-, di-, tri-, tetra- or penta functional. In one embodiment, di-functional monomers are employed for the desired flexibility and adhesion of the coating. The monomer can be straight- or branched-chain alkyl, cyclic, or partially aromatic. The reactive monomer diluent can also comprise a combination of monomers that, on balance, result in a desired adhesion for a coating composition on the substrate, where the coating composition can cure to form a hard, flexible material having the desired properties.

The acrylate monomer can include monomers having a plurality of acrylate or methacrylate moieties. These can be di-, tri-, tetra-or penta-functional, specifically di-functional, in order to increase the crosslink density of the cured coating and therefore can also increase modulus without causing brittleness. Examples of polyfunctional monomers include, but are not limited, to $C_6$-$C_{12}$ hydrocarbon diol diacrylates or dimethacrylates such as 1,6-hexanediol diacrylate (HDDA) and 1,6-hexanediol dimethacrylate; tripropylene glycol diacrylate or dimethacrylate; neopentyl glycol diacrylate or dimethacrylate; neopentyl glycol propoxylate diacrylate or dimethacrylate; neopentyl glycol ethoxylate diacrylate or dimethacrylate; 2-phenoxylethyl (meth)acrylate; alkoxylated aliphatic (meth)acrylate; polyethylene glycol (meth)acrylate; lauryl (meth)acrylate, isodecyl (meth)acrylate, isobornyl (meth)acrylate, tridecyl (meth)acrylate; and mixtures comprising at least one of the foregoing monomers. For example, the acrylate monomer can be 1,6-hexanediol diacrylate (HDDA), alone or in combination with another monomer, such as tripropyleneglycol diacrylate (TPGDA), trimethylolpropane triacrylate (TMPTA), oligotriacrylate (OTA 480), or octyl/decyl acrylate (ODA).

Another component of the transfer coating can be an optional polymerization initiator such as a photoinitiator. Generally, a photoinitiator can be used if the coating composition is to be ultraviolet cured; if it is to be cured by an electron beam, the coating composition can comprise substantially no photoinitiator.

When the transfer coating is cured by ultraviolet light, the photoinitiator, when used in a small but effective amount to promote radiation cure, can provide reasonable cure speed without causing premature gelation of the coating composition. Further, it can be used without interfering with the optical clarity of the cured coating material. Still further, the photoinitiator can be thermally stable, non-yellowing, and efficient.

Photoinitiators can include, but are not limited to, the following: $\alpha$-hydroxyketone; hydroxycyclohexylphenyl ketone; hydroxymethylphenylpropanone; dimethoxyphenylacetophenone; 2-methyl-1-[4-(methylthio)phenyl]-2-morpholinopropanone-1; 1-(4-isopropylphenyl)-2-hydroxy-2-methylpropan-1-one; 1-(4-dodecylphenyl)-2-hydroxy-2-methylpropan-1-one;4-(2-hydroxyethoxy) phenyl-(2-hydroxy-2-propyl) ketone; diethoxyacetophenone; 2,2-di-sec-butoxyacetophenone; diethoxy-phenyl acetophenone; bis (2,6-dimethoxybenzoyl)-2,4-, 4-trimethylpentylphosphine oxide; 2,4,6-trimethylbenzoyldiphenylphosphine oxide; 2,4,6-trimethylbenzoylethoxyphenylphosphine oxide; and combinations comprising at least of the foregoing.

Exemplary photoinitiators can include phosphine oxide photoinitiators. Examples of such photoinitiators include the IRGACURE™, LUCIRIN™ and DAROCURE™ series of phosphine oxide photoinitiators available from BASF Corp.; the ADDITOL™ series from Allnex; and the ESACURE™ series of photoinitiators from Lamberti, s.p.a. Other useful photoinitiators include ketone-based photoinitiators, such as hydroxy- and alkoxyalkyl phenyl ketones, and thioalkylphenyl morpholinoalkyl ketones. Also desirable can be benzoin ether photoinitiators. Specific exemplary photoinitiators include bis(2,4,6-trimethylbenzoyl)-phenylphosphine oxide supplied as IRGACURE™ 819 by BASF or 2-hydroxy-2-methyl-1-phenyl-1-propanone supplied as ADDITOL HDMAP™ by Allnex or 1-hydroxy-cyclohexyl-phenyl-ketone supplied as IRGACURE™ 184 by BASF or RUNTECURE™ 1104 by Changzhou Runtecure chemical Co. Ltd, or 2-hydroxy-2-methyl-1-phenyl-1-propanone supplied as DAROCURE™ 1173 by BASF.

The photoinitiator can be chosen such that the curing energy is less than 2.0 Joules per square centimeter ($J/cm^2$), and specifically less than 1.0 $J/cm^2$, when the photoinitiator is used in the designated amount.

The polymerization initiator can include peroxy-based initiators that can promote polymerization under thermal activation. Examples of useful peroxy initiators include benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di (trimethylsilyl)peroxide, trimethylsilylphenyltriphenylsilyl peroxide, and the like, and combinations comprising at least one of the foregoing polymerization initiators.

A conductive coating can contain an electromagnetic shielding material. The conductive coating can include a conductive material. Conductive materials can include pure metals such as silver (Ag), nickel (Ni), copper (Cu), metal oxides thereof, combinations comprising at least one of the foregoing, or metal alloys comprising at least one of the foregoing, or metals or metal alloys produced by the Metallurgic Chemical Process (MCP) described in U.S. Pat. No. 5,476,535. Metals of the conductive coating can be nanometer sized, e.g., such as where 90% of the particles can have an equivalent spherical diameter of less than 100 nanometers (nm). The metal particles can be sintered to form a network of interconnected metal traces defining randomly shaped openings on the substrate surface to which it is applied. The sintering temperature of the conductive coating can be 300 °C which can exceed the heat deflection temperature of some substrate materials. After sintering, the surface resistance of the conductive coating can be less than or equal to 0.1 ohm per square (ohm/sq). The conductive coating can have a surface resistance of less than 1/10th of the surface resistance of an indium tin oxide coating. The conductive coating can be transparent.

Unlike networks formed of nanometer sized metal wires, the conductive network formed of nanometer sized metal particles can be bent without reducing the conductivity and/or increasing the electrical resistance of the conductive network. For example, networks of metal wires can separate at junctions when bent, which can reduce the conductivity of the wire network, whereas the metal network of nanometer sized particles can deform elastically without separating traces of the network, thereby maintaining the conductivity of the network.

The conductive coating can be disposed adjacent to a surface of a substrate, e.g., a donor substrate. The conductive coating can be formed on a substrate, e.g., donor substrate, and after formation the coating can be transferred to another substrate, e.g., recipient substrate. The conductive coating can be applied to a substrate using any suitable wet coating technique, e.g., screen printing, spreading, spray coating, spin coating, dipping, and the like.

The substrate can be any shape. The substrate can have a first surface and a second surface. The substrate can include a polymer, a glass, or a combination of polymer and glass. The first surface of the substrate can comprise a first polymer. The second surface of the substrate can comprise a second polymer. The first surface of the substrate can be disposed opposite the second surface of the substrate. The first surface of the substrate can consist of the first polymer. The second surface of the substrate can consist of the second polymer. The first surface of the substrate can consist of the first polymer and the second surface of the substrate can consist of the second polymer. The first polymer and the second polymer can be co-extruded to form the substrate. The first polymer and the second polymer can be different polymers, e.g. can comprise different chemical compositions. The substrate can be flat and can include the first surface and the second surface where the second surface can be disposed opposite the first surface, such as co-extruded forming opposing sides of the substrate. The substrate can be flexible.

The transfer coating can be disposed adjacent to a surface of the substrate (e.g., dispersed across the surface of the substrate). The transfer coating can abut a surface of the substrate. The transfer coating can be used to transfer the conductive coating from a donor substrate to a recipient substrate. The transfer coating can have a greater adhesion to the recipient substrate than to the donor substrate, such that when the transfer coating is sandwiched between the recipient substrate and the donor substrate and the donor substrate is removed, the transfer coating can preferentially adhere to the recipient substrate rather than to the donor substrate. The transfer coating can be in mechanical communication with both the nano-metal network of the conductive coating and a surface of a substrate.

The transfer coating can be disposed on a surface of a substrate. The substrate can be a donor substrate to which a conductive coating is adhered, or can be a recipient substrate that can receive the conductive coating from the donor substrate. The transfer coating can be applied to the conductive coating, which can be applied to a donor substrate, such that the conductive coating can be disposed between the transfer coating and the donor substrate. The donor substrate including a conductive coating and a transfer coating can be coupled to a recipient substrate such that the transfer coating can abut a surface of the recipient substrate and can be sandwiched between the conductive coating and a surface of the recipient substrate. The donor substrate can then be removed and the transfer coating and the conductive coating can be left adhered to the recipient substrate. The transfer coating can at least partially surround the conductive coating. The conductive coating can be at least partially embedded in the transfer coating, such that a portion of the transfer coating can extend into an opening in the nano-metal network of the conductive coating.

The donor substrate, including the conductive coating, can be coupled to the transfer coating disposed on the surface of the recipient substrate, and the donor substrate can be removed such that the conductive coating can remain coupled to the transfer coating and adjacent to the recipient substrate. The donor substrate can include a polymer that

is capable of withstanding the conductive coating sintering temperature without damage.

A substrate can optionally include a substrate coating disposed on a surface of the substrate. The substrate coating can be disposed on two opposing surfaces of the substrate. The substrate coating can provide a protective portion to the substrate. The protective portion, such as an acrylic hard coat, can provide abrasion resistance to the underlying substrate. The protective portion can be disposed adjacent to a surface of the substrate. The protective portion can abut a surface of the substrate. The protective portion can be disposed opposite the conductive coating. The protective portion can include a polymer. In an embodiment, a substrate coating can include a polymeric coating offering good pencil hardness (e.g., 4-5H measured according to ASTM D3363 on polymethyl methacrylate or HB-F measured according to ASTM D3363 on polycarbonate) and chemical/abrasion resistance, together with desirable processing characteristics. For example, the substrate coating can include a coating such as a LEXAN™ OQ6DA film, commercially available from SABIC's Innovative Plastics Business or a similar acrylic based or silicon based coating, film, or coated film, which can provide enhanced pencil hardness, enhanced chemical resistance, variable gloss and printability, enhanced flexibility, and/or enhanced abrasion resistance. The coating can be 0.1 millimeter (mm) to 2 mm thick, for example, 0.25 mm to 1.5 mm, or, 0.5 mm to 1.2 mm thick. The coating can be applied on one or more sides of the substrate. For example, the substrate coating can include an acrylic hard coat.

FIG. 1 is an illustration of a conductive sheet or film 2. The sheet or film 2 can include a conductive coating 4, a transfer coating 6, a substrate 8, and a protective portion 10. The sheet or film 2 can be bent and/or formed (e.g., extruded), such that the depth of the shape of the sheet or film, D, is greater than the total thickness, T, of the sheet or film 2. The electrical conductivity of the conductive sheet or film 32 can be measured from point A to point B. The substrate can include a first surface 22 and a second surface 24. The substrate 8 can include two polymers that are co-extruded. The substrate can include a first surface 22 comprising a first polymer and a second side 24 comprising a second polymer. The coextruded substrate can include a first surface 22 consisting of a first polymer and a second surface 24 consisting of a second polymer. The conductive coating 4 can be disposed adjacent to the first surface 22 of the substrate 8. The transfer coating 6 can be applied directly to the first surface 22 of the substrate 8 or the transfer coating 6 can be applied to a conductive coating 4 adhered to a donor substrate. The donor substrate can then be coupled to the first surface 22 of the substrate 8, such that the transfer coating 6 can be sandwiched between the conductive coating 4 and the first surface 22 of the substrate 8, then the donor substrate can be removed, leaving the transfer coating 6 and the conductive coating 4 adjacent to the first surface 22 of the substrate 8. The sheet or film 2 can be curved in at least one dimension, e.g., the w-axis dimension. The sheet or film 2 can be curved in at least two dimensions, e.g., the w-axis and h-axis dimensions. The sheet or film 2 can have a width, W, measured along a w-axis. The sheet or film 2 can have a depth, D, measured along a d-axis. The sheet or film 2 can have a length, L, measured along the 1-axis. The sheet or film 2 can be flexible such that the change in the electrical resistance (measured between point A to point B) can be less than or equal to 1 ohm when the integrated conductive film 2 is bent. The thickness, T, of the sheet or film 2 can be 0.05 mm to 25 mm, for example, 0.05 mm to 10 mm, or, 0.1 mm to 5 mm. The sheet or film 2 can be curved. The depth, D, can be larger than twice the total thickness, T, of the sheet or film 2. The sheet or film 2 can have a maximum depth anywhere along the film. The conductive coating 4 can be at least partially surrounded by portions of the transfer coating 6, such that portions of the transfer coating 6 can extend into openings in the nano-metal network of the conductive coating 4.

FIG. 2 is an illustration of a portion of a cross-section of a conductive sheet or film 32. The conductive sheet or film 32 can include a conductive coating 14, a transfer coating 16, an optional first substrate coating 18, an optional second substrate coating 28, and a substrate 20. The electrical conductivity of the conductive sheet or film 32 can be measured from point A to point B. An optional first substrate coating 18 can be disposed adjacent to the substrate 20 such that the transfer coating 16 can be adhered to a surface 26 of the optional first substrate coating 18, and adjacent to the substrate 20. The conductive coating 14 can be at least partially surrounded by portions of the transfer coating 16, such that portions of the transfer coating 16 can extend into openings in the nano-metal network of the conductive coating 14. The sheet or film 32 can include an optional second substrate coating 28 disposed on a surface opposing the surface that the optional first substrate coating 18 is disposed.

The conductive sheet or film can transmit greater than or equal to 50% (e.g. 50 percent transmittance) of incident visible light (e.g., electromagnetic radiation having a frequency of 430 THz to 790 THz), for example, 60% to 100%, or, 70% to 100%. A transparent polymer, substrate, coating, film, and/or material of the sheet or film can transmit greater than or equal to 50% of incident EMR having a frequency of 430 THz to 790 THz, for example, 75% to 100%, or, 90% to 100%. Transparency is described by two parameters, percent transmission and percent haze. Percent transmittance and percent haze for laboratory scale samples can be determined using ASTM D1003, Procedure A using CIE standard illuminant C using a Haze-Gard test device. ASTM D1003 (Procedure B, Spectrophotometer, using illuminant C with diffuse illumination with unidirectional viewing) defines percent transmittance as:

$$\%T = \left(\frac{I}{I_O}\right) x100\% \qquad [1]$$

wherein: I is the intensity of the light passing through the test sample and $I_o$ is the Intensity of incident light.

The substrate can be formed by any polymer forming process. For example, a substrate can be formed by a co-extrusion process. The substrate can be co-extruded into a flat sheet. The substrate can be co-extruded into a flat sheet including a first surface comprising a first polymer and a second surface comprising a second polymer having a different chemical composition than the first polymer. The substrate can be co-extruded into a flat sheet including a first surface consisting of only a first polymer and a second surface consisting of only a second polymer having a different chemical composition than the first polymer. The substrate can be co-extruded into a flat sheet including a first surface consisting of polycarbonate and a second surface consisting of poly(methyl methacrylate) (PMMA).

The transfer coating can be cured. Curing the transfer coating can include waiting, heating, drying, exposing to electromagnetic radiation (e.g., electromagnetic radiation (EMR) in the UV spectrum), or a combination of one of the foregoing. The donor substrate can be removed, leaving the transfer coating and conductive coating adhered to a surface of the film.

The donor substrate can include a polymer. The adhesion between the transfer coating and a donor or recipient substrate can be determined following ASTM D3359. The adhesion, per ASTM D3359, between the transfer coating and the polymer of the donor substrate can be 0B. The adhesion, per ASTM D3359, between the conductive coating and the donor substrate can be 0B. The adhesion between the transfer coating and the polymer of the recipient substrate can be 5B. The transfer coating can have a greater adhesion for the polymer of the recipient substrate than for the polymer of the donor substrate.

The conductive sheet or film can be bent such that it is not flat. The substrate can be bent such that it is not coplanar with a plane defined by the length and width dimensions of the substrate (1-w plane in the attached figures). The substrate can be bent into a curved shape such that a depth dimension exceeds a total thickness, T, of the substrate (e.g., acknowledging that the thickness of the substrate can vary due to imperfections in manufacturing, such as tool tolerances, variations in process conditions such as temperature, variation in shrinkage during cooling, and the like). The substrate can be bent such that a portion of the substrate has a depth dimension greater than or equal to twice the total thickness, T, of the panel.

The perimeter shape of the conductive sheet or film can be any shape, e.g. circular, elliptical, or the shape of a polygon having straight or curved edges.

The substrate can include flexible films that can be formed, molded, and withstand torsion and tension. The conductive coating can be applied to a substrate using any suitable wet coating process, such as spray coating, dip coating, roll coating, and the like. The films can be formed using roll to roll manufacturing or a similar process.

A conductive sheet or film can be formed by transferring the conductive coating from a donor substrate to a recipient substrate. The substrates can be heated. The substrates can be heated to a temperature of greater than or equal to 70 °C. The substrates can be heated to a temperature of 70 °C to 95 °C. The transfer coating can be applied to a surface of the donor substrate. The transfer coating can be applied to a surface of the recipient substrate. The transfer coating can be applied to a substrate using any wet coating technique. The donor and recipient substrates can be pressed together to form a stack, where the transfer coating and the conductive coating can be sandwiched between surfaces of the donor and recipient substrates. Pressing can be performed by any suitable device, e.g., roller pressing, belt pressing, double belt pressing, stamping, die pressing, or a combination comprising at least one of the foregoing. The pressing device can be used to remove air bubbles trapped between the substrates. The pressing can include pressing the donor and recipient substrates together to a pressure of greater than 0.2 megaPascal (MPa), for example, 0.2 MPa to 1 MPa, or, 0.2 MPa to 0.5 MPa, or, 0.3 MPa, while the conductive coating and transfer coating are sandwiched in between the donor and recipient substrates. The stack of substrates can be exposed to heat, ultraviolet (UV) light or some other cure initiator to cure the transfer coating. The donor substrate can be removed, leaving behind the recipient substrate having a securely adhered conductive coating including the transfer coating.

In an embodiment, the conductive coating can be formed on a donor substrate, the transfer coating can be applied to the donor substrate or to the recipient substrate, the donor and recipient substrates can be heated and pressed together such that the transfer coating can be sandwiched between the substrates, and the donor substrate can be removed leaving the conductive coating and the transfer coating on the recipient substrate.

A polymer of a conductive sheet, film, or substrate, or used in the manufacture of the conductive sheet, film, or substrate, (e.g., recipient substrate, donor substrate, transfer coating, and optional substrate coating), can include a thermoplastic resin, a thermoset resin, or a combination comprising at least one of the foregoing.

Possible thermoplastic resins include, but are not limited to, oligomers, polymers, ionomers, dendrimers, copolymers such as graft copolymers, block copolymers (e.g., star block copolymers, random copolymers, and the like)

or a combination comprising at least one of the foregoing. Examples of such thermoplastic resins include, but are not limited to, polycarbonates (e.g., blends of polycarbonate (such as, polycarbonate-polybutadiene blends, copolyester polycarbonates)), polystyrenes (e.g., copolymers of polycarbonate and styrene, polyphenylene ether-polystyrene blends), polyimides (PI) (e.g., polyetherimides (PEI)), acrylonitrile-styrene-butadiene (ABS), polyalkylmethacrylates (e.g., polymethylmethacrylates (PMMA)), polyesters (e.g., copolyesters, polythioesters), polyolefins (e.g., polypropylenes (PP) and polyethylenes, high density polyethylenes (HDPE), low density polyethylenes (LDPE), linear low density polyethylenes (LLDPE)), polyethylene terephthalate (PET), polyamides (e.g., polyamideimides), polyarylates, polysulfones (e.g., polyarylsulfones, polysulfonamides), polyphenylene sulfides, polytetrafluoroethylenes, polyethers (e.g., polyether ketones (PEK), polyether etherketones (PEEK), polyethersulfones (PES)), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidones, polycarboranes, polyoxabicyclononanes, polydibenzofurans, polyphthalamide, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazanes, polysiloxanes, fluoropolymers (e.g., polyvinyl fluourides (PVF), polyvinylidene fluorides (PVDF), fluorinated ethylene-propylenes (FEP), polyethylene tetrafluoroethylenes (ETFE)), polyethylene naphthalates (PEN), cyclic olefin copolymers (COC), or a combination comprising at least one of the foregoing.

More particularly, a thermoplastic resin can include, but is not limited to, polycarbonate resins (e.g., LEXAN™ resins, including LEXAN™ CFR resins, commercially available from SABIC's Innovative Plastics business), polyphenylene ether-polystyrene resins (e.g., NORYL™ resins, commercially available from SABIC's Innovative Plastics business), polyetherimide resins (e.g., ULTEM™ resins, commercially available from SABIC's Innovative Plastics business), polybutylene terephthalate-polycarbonate resins (e.g., XENOY™ resins, commercially available from SABIC's Innovative Plastics business), copolyestercarbonate resins (e.g., LEXAN™ SLX resins, commercially available from SABIC's Innovative Plastics business), or a combination comprising at least one of the foregoing resins. Even more particularly, the thermoplastic resins can include, but are not limited to, homopolymers and copolymers of a polycarbonate, a polyester, a polyacrylate, a polyamide, a polyetherimide, a polyphenylene ether, or a combination comprising at least one of the foregoing resins. The polycarbonate can comprise copolymers of polycarbonate (e.g., polycarbonate-polysiloxane, such as polycarbonate-polysiloxane block copolymer, polycarbonate-dimethyl bisphenol cyclohexane (DMBPC) polycarbonate copolymer (e.g., LEXAN™ DMX and LEXAN™ XHT resins commercially available from SABIC's Innovative Plastics business), polycarbonate-polyester copolymer (e.g., XYLEX™ resins, commercially available from SABIC's Innovative Plastics business),), linear polycarbonate, branched polycarbonate, end-capped polycarbonate (e.g., nitrile end-capped polycarbonate), or a combination comprising at least one of the foregoing, for example, a combination of branched and linear polycarbonate.

As used herein, the term "polycarbonate" means compositions having repeating structural carbonate units of formula (1)

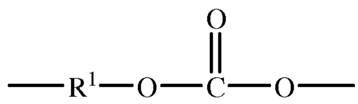

(1)

in which at least 60 percent of the total number of $R^1$ groups contain aromatic moieties and the balance thereof are aliphatic, alicyclic, or aromatic. In an embodiment, each $R^1$ is a $C_{6-30}$ aromatic group, that is, contains at least one aromatic moiety. $R^1$ can be derived from a dihydroxy compound of the formula $HO-R^1-OH$, in particular of formula (2)

$$HO-A^1-Y^1-A^2-OH \qquad (2)$$

wherein each of $A^1$ and $A^2$ is a monocyclic divalent aromatic group and $Y^1$ is a single bond or a bridging group having one or more atoms that separate $A^1$ from $A^2$. In an exemplary embodiment, one atom separates $A^1$ from $A^2$. Specifically, each $R^1$ can be derived from a dihydroxy aromatic compound of formula (3)

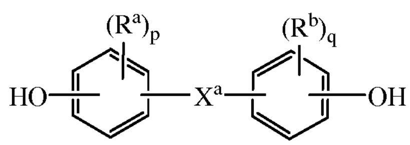

(3)

wherein $R^a$ and $R^b$ each represent a halogen or $C_{1-12}$ alkyl group and can be the same or different; and p and q are each independently integers of 0 to 4. It will be understood that $R^a$ is hydrogen when p is 0, and likewise $R^b$ is hydrogen when q is 0. Also in formula (3), $X^a$ represents a bridging group connecting the two hydroxy-substituted aromatic groups, where the bridging group and the hydroxy substituent of each C6 arylene group are disposed ortho, meta, or para (specifically para) to each other on the C6 arylene group. In an embodiment, the bridging group $X^a$ is single bond, -O-, -S-, -S(O)-, $-S(O)_2-$, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the C6 arylene groups connected thereto are each connected to a common alkylidene carbon or to different carbons of the $C_{1-18}$ organic bridging group. In one embodiment, p and q are each 1, and $R^a$ and $R^b$ are each a $C_{1-3}$ alkyl group, specifically methyl, disposed meta to the hydroxy group on each arylene group.

In an embodiment, $X^a$ is a substituted or unsubstituted $C_{3-18}$ cycloalkylidene, a $C_1$-$_{25}$ alkylidene of formula $-C(R^c)(R^d)-$ wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl, or a group of the formula $-C(=R^e)-$ wherein $R^e$ is a divalent $C_{1-12}$ hydrocarbon group. Exemplary groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene. A specific example wherein $X^a$ is a substituted cycloalkylidene is the cyclohexylidene-bridged, alkylsubstituted bisphenol of formula (4)

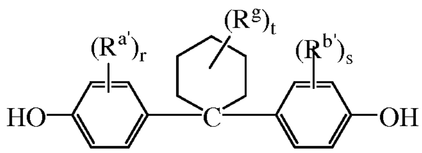

(4)

wherein $R^{a'}$ and $R^{b'}$ are each independently $C_{1-12}$ alkyl, $R^g$ is $C_{1-12}$ alkyl or halogen, r and s are each independently 1 to 4, and t is 0 to 10. In a specific embodiment, at least one of each of $R^{a'}$ and $R^{b'}$ are disposed meta to the cyclohexylidene bridging group. The substituents $R^{a'}$, $R^{b'}$, and $R^g$ can, when comprising an appropriate number of carbon atoms, be straight chain, cyclic, bicyclic, branched, saturated, or unsaturated. In an embodiment, $R^{a'}$ and $R^{b'}$ are each independently $C_{1-4}$ alkyl, $R^g$ is $C_{1-4}$ alkyl, r and s are each 1, and t is 0 to 5. In another specific embodiment, $R^{a'}$, $R^{b'}$ and $R^g$ are each methyl, r and s are each 1, and t is 0 or 3. The cyclohexylidene-bridged bisphenol can be the reaction product of two moles of o-cresol with one mole of cyclohexanone. In another exemplary embodiment, the cyclohexylidene-bridged bisphenol is the reaction product of two moles of a cresol with one mole of a hydrogenated isophorone (e.g., 1,1,3-trimethyl-3-cyclohexane-5-one). Such cyclohexane-containing bisphenols, for example the reaction product of two moles of a phenol with one mole of a hydrogenated isophorone, are useful for making polycarbonate polymers with high glass transition temperatures and high heat distortion temperatures.

In another embodiment, $X^a$ is a $C_{1-18}$ alkylene group, a $C_{3-18}$ cycloalkylene group, a fused $C_{6-18}$ cycloalkylene group, or a group of the formula $-B^1-W-B^2-$ wherein $B^1$ and $B^2$ are the same or different $C_{1-6}$ alkylene group and W is a $C_{3-12}$ cycloalkylidene group or a $C_{6-16}$ arylene group.

$X^a$ can also be a substituted $C_{3-18}$ cycloalkylidene of formula (5)

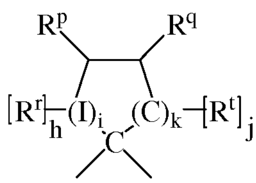

(5)

wherein $R^r$, $R^p$, $R^q$, and $R^t$ are independently hydrogen, halogen, oxygen, or $C_{1-12}$ organic groups; I is a direct bond, a carbon, or a divalent oxygen, sulfur, or -N(Z)- where Z is hydrogen, halogen, hydroxy, $C_{1-12}$ alkyl, $C_{1-12}$ alkoxy, or $C_{1-12}$ acyl; h is 0 to 2, j is 1 or 2, i is an integer of 0 or 1, and k is an integer of 0 to 3, with the proviso that at least two of $R^r$, $R^p$, $R^q$, and $R^t$ taken together are a fused cycloaliphatic, aromatic, or heteroaromatic ring. It will be understood that where the fused ring is aromatic, the ring as shown in formula (5) will have an unsaturated carbon-carbon linkage where the ring is fused. When k is 1 and i is 0, the ring as shown in formula (5) contains 4 carbon atoms, when k is 2, the ring as shown in formula (5) contains 5 carbon atoms, and when k is 3, the ring contains 6 carbon atoms. In one embodiment,

two adjacent groups (e.g., $R^q$ and $R^1$ taken together) form an aromatic group, and in another embodiment, $R^q$ and $R^1$ taken together form one aromatic group and $R^r$ and $R^p$ taken together form a second aromatic group. When $R^q$ and $R^t$ taken together form an aromatic group, $R^p$ can be a double-bonded oxygen atom, i.e., a ketone.

Other useful aromatic dihydroxy compounds of the formula HO-$R^1$-OH include compounds of formula (6)

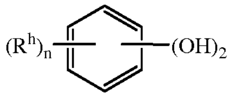

(6)

wherein each $R^h$ is independently a halogen atom, a $C_{1-10}$ hydrocarbyl such as a $C_{1-10}$ alkyl group, a halogen-substituted $C_{1-10}$ alkyl group, a $C_{6-10}$ aryl group, or a halogen-substituted $C_{6-10}$ aryl group, and n is 0 to 4. The halogen is usually bromine.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis (4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (p,p-PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of $A^1$ and $A^2$ is p-phenylene and $Y^1$ is isopropylidene in formula (3).

The homopolymer of DMBPC carbonate, which is represented by the x portion of formula (7) or its copolymer with BPA carbonate has an overall chemical structure represented by formula (7)

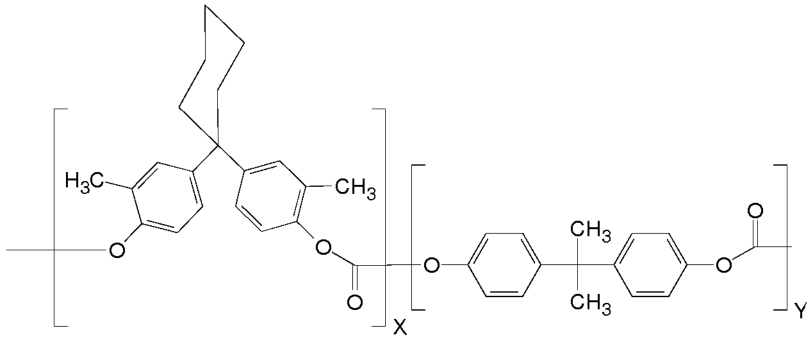

(7).

DMBPC carbonate can be co-polymerized with BPA carbonate to form a DMBPC BPA co-polycarbonate. For example, DMBPC based polycarbonate as a copolymer or homopolymer (DMBPC) can comprise 10 to 100 mol% DMBPC carbonate and 90 to 0 mol% BPA carbonate.

The method of making any of the polycarbonates herein described is not particularly limited. It may be produced by any known method of producing polycarbonate including the interfacial process using phosgene and/or the melt process using a diaryl carbonate, such as diphenyl carbonate or bismethyl salicyl carbonate, as the carbonate source.

"Polycarbonates" as used herein further include homopolycarbonates, (wherein each $R^1$ in the polymer is the same), copolymers comprising different $R^1$ moieties in the carbonate (referred to herein as "copolycarbonates"), copolymers comprising carbonate units and other types of polymer units, such as ester units, and combinations comprising at least one of homopolycarbonates and/or copolycarbonates. As used herein, a "combination" is inclusive of blends, mixtures, alloys, reaction products, and the like.

The polycarbonate composition can further include impact modifier(s). Exemplary impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR) silicone elastomers, and elastomer-modified graft copolymers such as styrene-butadiene-styrene (SBS), styrene-butadiene rubber (SBR), styrene-ethylene-butadiene-styrene (SEBS), acrylonitrile-butadiene-styrene (ABS), acrylonitrile-ethylene-propylene-diene-styrene (AES), styrene-isoprene-styrene (SIS), methyl methacrylate-butadiene-styrene (MBS), high rubber graft (HRG), and the like. Impact modifiers are generally present in amounts of 1 to 30 wt.%, based on the total weight of the polymers in the composition.

A polymer of the film can include various additives ordinarily incorporated into polymer compositions of this type, with the proviso that the additive(s) are selected so as to not significantly adversely affect the desired properties of the polymeric composition, in particular hydrothermal resistance, water vapor transmission resistance, puncture resistance, and thermal shrinkage. Such additives can be mixed at a suitable time during the mixing of the components for forming the composition. Exemplary additives include fillers, reinforcing agents, antioxidants, heat stabilizers, light stabilizers, ultraviolet (UV) light stabilizers, plasticizers, lubricants, mold release agents, antistatic agents, colorants such as titanium dioxide, carbon black, and organic dyes, surface effect additives, radiation stabilizers, flame retardants, and anti-drip agents. A combination of additives can be used, for example a combination of a heat stabilizer, mold release agent, and ultraviolet light stabilizer. The total amount of additives (other than any impact modifier, filler, or reinforcing agents) is generally 0.01 to 5 wt.%, based on the total weight of the composition.

Light stabilizers and/or ultraviolet light (UV) absorbing stabilizers can also be used. Exemplary light stabilizer additives include benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or combinations comprising at least one of the foregoing light stabilizers. Light stabilizers are used in amounts of 0.01 to 5 parts by weight, based on 100 parts by weight of the total composition, excluding any filler.

UV light absorbing stabilizers include triazines, dibenzoylresorcinols (such as TINUVIN* 1577 commercially available from BASF and ADK STAB LA-46 commercially available from Asahi Denka), hydroxybenzophenones; hydroxybenzotriazoles; hydroxyphenyl triazines (e.g., 2-hydroxyphenyl triazine); hydroxybenzotriazines; cyanoacrylates; oxanilides; benzoxazinones; 2- (2H-benzotriazol-2-yl)-4-(1,1,3,3-tetramethylbutyl)-phenol (CYASORB* 5411); 2-hydroxy-4-n-octyloxybenzophenone (CYASORB* 531); 2-[4,6-bis(2,4-dimethylphenyl)-1,3,5-triazin-2-yl]-5-(octyloxy)-phenol (CYASORB* 1164); 2,2'-(1,4-phenylene)bis(4H-3,1-benzoxazin-4-one) (CYASORB* UV-3638); 1,3-bis[(2-cyano-3,3-diphenylacryloyl)oxy]-2,2-bis[[(2-cyano-3,3-diphenylacryloyl)oxy]methyl]propane (UVINUL* 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; nano-size inorganic materials such as titanium oxide, cerium oxide, and zinc oxide, all with a particle size less than or equal to 100 nanometers, or combinations comprising at least one of the foregoing UV light

absorbing stabilizers. UV light absorbing stabilizers are used in amounts of 0.01 to 5 parts by weight, based on 100 parts by weight of the total composition, excluding any filler.

The recipient substrate can include polycarbonate. The recipient substrate can include poly(methyl methacrylate) (PMMA). The recipient substrate can include coextruded polycarbonate and poly(methyl methacrylate) (PMMA). The recipient substrate can include coextruded polycarbonate and poly(methyl methacrylate) (PMMA) where a first surface of the substrate consists of polycarbonate and a second surface of the substrate consists of PMMA. The donor substrate can include polyethylene terephthalate (PET). The transfer coating can be applied to a surface of the substrate comprising polycarbonate. The transfer coating can be applied to a surface of the substrate consisting of polycarbonate. The transfer coating can be disposed between the conductive coating and a surface of the substrate comprising polycarbonate. The transfer coating can be disposed between the conductive coating and a surface of the substrate consisting of polycarbonate.

EXAMPLES

Five transfer coating formulations were tested as shown in Table 1. Each transfer coating included a multifunctional acrylate to aid in adhesion to a donor substrate. Each transfer coating included 1,6-hexanediol diacrylate to aid in adhesion between the transfer coating and the recipient substrate. The transfer coating included a photoinitiator (e.g., RUNTECURE™ 1104) to facilitate curing of the coating under UV exposure. Each formulation was heated for 30 minutes at 60 °C in an oven to aid in mixing.

**Table 1: Transfer Coating Formulations**

| **Monomers** | | **Description** | **A** | **B** | **C** | **D** | **E** |
|---|---|---|---|---|---|---|---|
| **HDDA (wt.%)** | | 1,6-hexanediol diacrylate | 40 | 40 | 40 | 40 | 36 |
| **1104 (wt.%)** | | 1-hydroxy-cyclohexylphenylketone | 5 | 5 | 5 | 5 | 4 |
| **multi-functional acrylate (wt.%)** | **DM5272** | aliphatic urethane acrylate oligomer 30-50 wt%; pentaerythritol tetraacrylate 50-70 wt% | 55 | | | | |
| | **CN9010** | aliphatic urethane acrylate; acrylic ester | | 55 | | | |
| | **DPHA** | dipentaerythritol dexaacrylate | | | 55 | | |
| | **EB8311** | acrylated resin | | | | 55 | |
| | **SR351** | trimethylolpropane triacrylate (TMPTA) | | | | | 40 |
| | **SR399** | dipentaerythritol pentaacrylate esters | | | | | 20 |

These formulations were tested for adhesion, surface resistivity (following ASTM D257 using deionized water), transmittance, haze and pencil hardness. Adhesion between the transfer coating and the substrate was determined following ASTM D3359, where 5B means 100% adhesion on the substrate, and 0B means 100% delamination of the transfer coating from the substrate. The adhesion was measured prior to exposure to boiling water, after a 1 hour exposure to boiling water, and after 2 hours of exposure to boiling water. The pencil hardness of a conductive sheet or film was determined following ASTM D3363 using Mitsubishi Uni Pencil with 1 kilogram (kg) loading. The pencil hardness from softest to hardest is: 6B-5B-4B-3B-2B-B-HB-F-H-2H-3H-4H-5H-6H. Table 2 shows the results of these tests. The transmission and haze of each sample was tested per ASTM D1003. The transmission and haze of each sample was tested per ASTM D1003 procedure A using CIE standard illuminant C using a Haze-Gard test device.

**Table 2: Transfer Coating Performance**

| | Transfer Coating | Transfer result | Adhesion | | | Surface resistivity(Ω) | | | Transmittance | Haze | Pencil Hardness |
|---|---|---|---|---|---|---|---|---|---|---|---|
| | | | boil 0h | boil 1h | boil 2hrs | boil 0h | boil 1h | boil 2hrs | | | |
| Substrate 1 | A | success | 5B | 5B | 5B | 6.9 | 4.9 | 5.3 | 81.7 | 5.72 | H1/5,2H4/4 |
| | B | success | 5B | 5B | 0B | 7.4 | 4.7 | 4.3 | 80.9 | 4.8 | H0/5,2H3/3 |
| | C | success | 5B | 0B | 0B | 9.2 | 5.2 | 9.9 | 80.7 | 4.54 | H0/5,2H3/3 |
| | D | success | 5B | 5B | 0B | 7.6 | 4.9 | 5.2 | 80.6 | 7.29 | H1/5,2H3/3 |
| | E | success | 5B | 0B | 0B | 7.8 | 5.1 | 8.6 | 81.4 | 3.94 | H0/5,2H2/3 |
| Substrate 2 | A | success | 5B | 5B | 5B | / | / | / | 82.7 | 4.15 | / |
| | B | success | 5B | 0B | 3B | / | / | / | 81.6 | 4.04 | / |
| | C | success | 5B | 0B | 0B | / | / | / | 82.2 | 3.69 | / |
| | D | success | 5B | 5B | 5B | / | / | / | 81.2 | 5.71 | / |
| | E | success | 5B | 0B | 0B | / | / | / | 82.4 | 4.35 | / |
| Substrate 3 | A | success | 5B | 5B | 0B | / | / | / | 82.4 | 4.54 | / |
| | B | success | 5B | 0B | 0B | / | / | / | 83.1 | 3.79 | / |
| | C | success | 5B | 0B | 0B | / | / | / | 83 | 3.61 | / |
| | D | success | 5B | 5B | 2B | / | / | / | 81.7 | 4.94 | / |
| | E | success | 5B | 0B | 0B | / | / | / | 82.3 | 3.74 | / |
| Substrate 4 | A | success | 5B | 5B | 5B | | | | 83 | 4.39 | |
| | B | success | 5B | 0B | 0B | | | | 83 | 3.6 | |
| | C | success | 5B | 0B | 0B | | | | 82.1 | 4.38 | |
| | D | success | 5B | 4B | 3B | | | | 82.5 | 3.78 | |
| | E | success | 5B | 0B | 0B | | | | / | 3.89 | |

All five formulations could transfer the conductive coating to the substrate with an adhesion value of 5B per ASTM D3359 before water boiling. The samples were put into boiling deionized water to determine the adhesion stability after 1 hour and after 2 hours. Adhesion was tested per ASTM D3359 and the results show transfer coating A (DM5272) and transfer coating D (EB8311) had the highest adhesion after the boiling test.

The surface resistivity of substrate 1 before and after the water boiling test was determined using ASTM D257 using deionized water. The results show the change in surface resistivity as a result of the 2 hour boil test was -1.6 ohms(Ω), -3.1 Ω, +0.7 Ω, -2.4 Ω, and +0.8 Ω respectively for transfer coating formulations A-E on substrate 1 as can be calculated from the results provided in Table 2.

Pencil hardness testing was performed for sample 1 and the results show that each formulation can exhibit H hardness as determined per ASTM D3363.

The preheating temperature was also screened from 50 °C to 95 °C for formulations A and D to evaluate temperature effect on adhesion. The results, shown in Table 3, indicate that temperature adhesion is best when the preheating temperature is 70 °C to 95 °C, inclusive of the endpoints.

| Table 3: Adhesion and Transfer Result as a Function of Drying Temperature | | | | |
|---|---|---|---|---|
| | Transfer Coating | Dry Temp | Transfer result | Adhesion |
| | | | | Original |
| Sample 5 | A | 50 °C | <50% Partial | 0B |
| | | 60 °C | success | 5B |
| | | 70 °C | success | 5B |
| | | 80 °C | success | 5B |
| | | 95 °C | success | 5B |
| | D | 50 °C | <50% partial | 0B |
| | | 60 °C | >50% partial | 3B |
| | | 70 °C | success | 5B |
| | | 80 °C | success | 5B |
| | | 95 °C | success | 5B |

COMPARATIVE EXAMPLE

The adhesion of a UV curable transfer coating designated ND-9740-1 (commercially available from NanoPhotonic Chemical of Siheung-si, Gyeonggi-do, Korea) was tested for adhesion to a polycarbonate substrate. The resulting adhesion as determined per ASTM D3359 was 0B. Because the adhesion result was 0B this sample was not subjected to a boiling water test.

Unless otherwise specified herein, any reference to standards, testing methods and the like, such as ASTM D1003, ASTM D3359, ASTM D3363, refer to the standard, or method that is in force at the time of filing of the present application.

The transfer coating and methods of making include at least the following embodiments:

Embodiment 1: An ultraviolet curable transfer coating comprising: a multifunctional acrylate oligomer; and an acrylate monomer; wherein the ultraviolet curable transfer coating includes a total weight, wherein 30 % to 80 % of the total weight comprises the multifunctional acrylate oligomer, and wherein 15 % to 65% of the total weight comprises the acrylate monomer; wherein the ultraviolet curable transfer coating can adhere to a polycarbonate substrate with an adhesion strength of greater than or equal to 3B as measured according to ASTM D3359.

Embodiment 2: The ultraviolet curable transfer coating of Embodiment 1, further comprising a photoinitiator; wherein 3% to 7% of the total weight comprises the photoinitiator; wherein the ultraviolet curable transfer coating can adhere to a polycarbonate substrate with an adhesion strength of greater than or equal to 3B as measured according to ASTM D3359.

Embodiment 3: The ultraviolet curable transfer coating of any of Embodiments 1 - 2, wherein the multifunctional acrylate oligomer comprises an aliphatic urethane acrylate oligomer, a pentaerythritol tetraacrylate, an aliphatic urethane acrylate, an acrylic ester, a dipentaerythritol dexaacrylate, an acrylated resin, a trimethylolpropane triacrylate (TMPTA), a dipentaerythritol pentaacrylate ester, or a combination comprising at least one of the foregoing.

Embodiment 4: The ultraviolet curable transfer coating of any of Embodiments 1 - 3, wherein the multifunctional acrylate oligomer comprises an aliphatic urethane acrylate oligomer and a pentaerythritol tetraacrylate, wherein the multifunctional acrylate oligomer includes a multifunctional acrylate oligomer weight, wherein 30 % to 50 % of the multifunctional acrylate oligomer weight comprises the aliphatic urethane acrylate oligomer, and wherein 50% to 70% of the multifunctional acrylate oligomer weight comprises the pentaerythritol tetraacrylate.

Embodiment 5: The ultraviolet curable transfer coating of any of Embodiments 1 - 4, wherein the multifunctional acrylate oligomer comprises acrylated resin.

Embodiment 6: The ultraviolet curable transfer coating of any of Embodiments 1 and 3 - 4, wherein the photoinitiator comprises an $\alpha$-hydroxyketone photoinitiator.

Embodiment 7: The ultraviolet curable transfer coating of Embodiment 6, wherein the $\alpha$-hydroxyketone photoinitiator is 1-hydroxy-cyclohexylphenylketone.

Embodiment 8: The ultraviolet curable transfer coating of any of Embodiments 1 - 7, wherein the acrylate monomer comprises 1,6-hexanediol diacrylate.

Embodiment 9: A conductive sheet or film comprising: a substrate including a first surface and a second surface; an ultraviolet curable transfer coating of any of the Embodiments 1 - 8 adhered to the first surface; and a conductive coating adjacent to the ultraviolet curable transfer coating, wherein the conductive coating includes nanometer sized metal particles arranged in a network, and wherein the conductive coating has a surface resistance of less than or equal to 0.1 ohm/sq; wherein the sheet or film has a pencil hardness of greater than or equal to H as measured according to ASTM D3363 using a Mitsubishi Uni pencil having a 1 kilogram loading and wherein the sheet or film has a haze of less than or equal to 6% as measured according to ASTM D1003 Procedure A using CIE standard illuminant C.

Embodiment 10: The conductive sheet or film of Embodiment 9, wherein the substrate comprises a polycarbonate, a poly(methyl methacrylate) (PMMA), a glass, or a combination comprising at least one of the foregoing.

Embodiment 11: The conductive sheet or film of any of Embodiments 9 - 10, wherein the sheet or film has a transmittance of greater than or equal to 70% of incident light having a frequency of 430 THz to 790 THz as measured according to ASTM D1003 Procedure A using CIE standard illuminant C.

Embodiment 12: The conductive sheet or film of any of Embodiments 9 - 11, wherein the sheet or film has a transmittance of greater than or equal to 80% as measured according to ASTM D1003 Procedure A using CIE standard illuminant C and wherein the sheet or film has a change in surface resistivity of less than or equal to 4 ohms after it is boiled in water for 2 hours as measured according to ASTM D257.

Embodiment 13: A method of making a conductive substrate comprising: applying an ultraviolet curable transfer coating of any of Embodiments 1 - 8 to a first surface of a recipient substrate or to a first surface of a donor substrate, wherein the first surface of the donor substrate includes a conductive coating coupled thereto; pressing the first surface of the recipient substrate and the first surface of the donor substrate together to form a stack, wherein the ultraviolet curable transfer coating is disposed therebetween; heating the stack; activating the ultraviolet curable transfer coating with an ultraviolet radiation source; removing the donor substrate from the stack leaving a conductive substrate; wherein the ultraviolet curable transfer coating remains adhered to the first surface the recipient substrate, and to the conductive coating, wherein the heating further comprises heating to greater than 70°C.

Embodiment 14: The method of Embodiment 13, comprising applying a protective material to a surface of the conductive substrate and comprising trimming the conductive substrate.

Embodiment 15: The method of any of Embodiments 13 - 14, wherein pressing comprises roller pressing, belt pressing, double belt pressing, stamping, die pressing, or a combination comprising at least one of the foregoing.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

## Claims

**1.** An ultraviolet curable transfer coating comprising:

a multifunctional acrylate oligomer; and
an acrylate monomer;
wherein the ultraviolet curable transfer coating includes a total weight, wherein 30 % to 80 % of the total weight comprises the multifunctional acrylate oligomer, and wherein 15% to 65% of the total weight comprises the acrylate monomer;

wherein the ultraviolet curable transfer coating can adhere to a polycarbonate substrate with an adhesion strength of greater than or equal to 3B as measured according to ASTM D3359.

2. The ultraviolet curable transfer coating of Claim 1, further comprising
a photoinitiator;
wherein 3% to 7% of the total weight comprises the photoinitiator;
wherein the ultraviolet curable transfer coating can adhere to a polycarbonate substrate with an adhesion strength of greater than or equal to 3B as measured according to ASTM D3359.

3. The ultraviolet curable transfer coating of any of Claims 1 - 2, wherein the multifunctional acrylate oligomer comprises an aliphatic urethane acrylate oligomer, a pentaerythritol tetraacrylate, an aliphatic urethane acrylate, an acrylic ester, a dipentaerythritol dexaacrylate, an acrylated resin, a trimethylolpropane triacrylate (TMPTA), a dipentaerythritol pentaacrylate ester, or a combination comprising at least one of the foregoing.

4. The ultraviolet curable transfer coating of any of Claims 1 - 3, wherein the multifunctional acrylate oligomer comprises an aliphatic urethane acrylate oligomer and a pentaerythritol tetraacrylate, wherein the multifunctional acrylate oligomer includes a multifunctional acrylate oligomer weight, wherein 30 % to 50 % of the multifunctional acrylate oligomer weight comprises the aliphatic urethane acrylate oligomer, and wherein 50% to 70% of the multifunctional acrylate oligomer weight comprises the pentaerythritol tetraacrylate.

5. The ultraviolet curable transfer coating of any of Claims 1 - 4, wherein the multifunctional acrylate oligomer comprises acrylated resin.

6. The ultraviolet curable transfer coating of any of Claims 1 and 3 - 4, wherein the photoinitiator comprises an $\alpha$-hydroxyketone photoinitiator.

7. The ultraviolet curable transfer coating of any of Claim 6, wherein the $\alpha$-hydroxyketone photoinitiator is 1-hydroxycyclohexylphenylketone.

8. The ultraviolet curable transfer coating of any of Claims 1 - 7, wherein the acrylate monomer comprises 1,6-hexanediol diacrylate.

9. A conductive sheet or film comprising:

   a substrate including a first surface and a second surface;
   an ultraviolet curable transfer coating of any of the Claims 1 - 8 adhered to the first surface; and
   a conductive coating adjacent to the ultraviolet curable transfer coating, wherein the conductive coating includes nanometer sized metal particles arranged in a network, and wherein the conductive coating has a surface resistance of less than or equal to 0.1 ohm/sq;
   wherein the sheet or film has a pencil hardness of greater than or equal to H as measured according to ASTM D3363 using a Mitsubishi Uni pencil having a 1 kilogram loading and wherein the sheet or film has a haze of less than or equal to 6% as measured according to ASTM D1003 Procedure A using CIE standard illuminant C.

10. The conductive sheet or film of Claim 9, wherein the substrate comprises a polycarbonate, a poly(methyl methacrylate) (PMMA), a glass, or a combination comprising at least one of the foregoing..

11. The conductive sheet or film of any of Claims 9-10 wherein the sheet or film has a transmittance of greater than or equal to 70% of incident light having a frequency of 430 THz to 790 THz as measured according to ASTM D1003 Procedure A using CIE standard illuminant C.

12. The conductive sheet or film of any of Claims 9-11, wherein the sheet or film has a transmittance of greater than or equal to 80% as measured according to ASTM D1003 Procedure A using CIE standard illuminant C and wherein the sheet or film has a change in surface resistivity of less than or equal to 4 ohms after it is boiled in water for 2 hours as measured according to ASTM D257.

13. A method of making a conductive substrate comprising:

   applying an ultraviolet curable transfer coating of any of Claims 1 - 8 to a first surface of a recipient substrate

or to a first surface of a donor substrate, wherein the first surface of the donor substrate includes a conductive coating coupled thereto;
pressing the first surface of the recipient substrate and the first surface of the donor substrate together to form a stack, wherein the ultraviolet curable transfer coating is disposed therebetween;
heating the stack;
activating the ultraviolet curable transfer coating with an ultraviolet radiation source;
removing the donor substrate from the stack leaving a conductive substrate; wherein the ultraviolet curable transfer coating remains adhered to the first surface of the recipient substrate and to the conductive coating; wherein the heating further comprises heating to greater than 70 °C.

**14.** The method of Claim 13, comprising applying a protective material to a surface of the conductive substrate and comprising trimming the conductive substrate.

**15.** The method of any of Claims 13-14, wherein pressing comprises roller pressing, belt pressing, double belt pressing, stamping, die pressing, or a combination comprising at least one of the foregoing.

**Patentansprüche**

**1.** Ultravioletthärtbare Transferbeschichtung, umfassend:

ein multifunktionales Acrylat-Oligomer und
ein Acrylat-Monomer;
wobei die ultravioletthärtbare Transferbeschichtung ein Gesamtgewicht aufweist, wobei das multifunktionale Acrylat-Oligomer 30 % bis 80 % des Gesamtgewichts ausmacht und wobei das Acrylat-Monomer 15 % bis 65 % des Gesamtgewichts ausmacht;
wobei die ultravioletthärtbare Transferbeschichtung an einem Polycarbonat-Substrat mit einer Haftfestigkeit von größer oder gleich 3B haften kann, gemessen nach ASTM D3359.

**2.** Ultravioletthärtbare Transferbeschichtung nach Anspruch 1, ferner umfassend:

einen Photoinitiator;
wobei der Photoinitiator 3 % bis 7 % des Gesamtgewichts ausmacht;
wobei die ultravioletthärtbare Transferbeschichtung an einem Polycarbonat-Substrat mit einer Haftfestigkeit von größer oder gleich 3B haften kann, gemessen nach ASTM D3359.

**3.** Ultravioletthärtbare Transferbeschichtung nach einem der Ansprüche 1 bis 2, wobei das multifunktionale Acrylat-Oligomer ein aliphatisches Urethanacrylat-Oligomer, ein Pentaerythritoltetraacrylat, ein aliphatisches Urethanacrylat, einen Acrylester, ein Dipentaerythritoldexaacrylat, ein acrylisiertes Harz, ein Trimethylolpropantriacrylat (TMPTA), einen Dipentaerythritolpentaacrylatester oder eine Kombination von mindestens einem der Vorstehenden umfasst.

**4.** Ultravioletthärtbare Transferbeschichtung nach einem der Ansprüche 1 bis 3, wobei das multifunktionale Acrylat-Oligomer ein aliphatisches Urethanacrylat-Oligomer und ein Pentaerythritoltetraacrylat umfasst, wobei das multifunktionale Acrylat-Oligomer ein Gewicht des multifunktionalen Acrylat-Oligomers aufweist, wobei das aliphatische Urethanacrylat-Oligomer 30 % bis 50 % des Gewichts des multifunktionalen Acrylat-Oligomers ausmacht und wobei das Pentaerythritoltetraacrylat 50 % bis 70 % des Gewichts des multifunktionalen Acrylat-Oligomers ausmacht.

**5.** Ultravioletthärtbare Transferbeschichtung nach einem der Ansprüche 1 bis 4, wobei das multifunktionale Acrylat-Oligomer ein acrylisiertes Harz umfasst.

**6.** Ultravioletthärtbare Transferbeschichtung nach einem der Ansprüche 1 und 3 bis 4, wobei der Photoinitiator einen $\alpha$-Hydroxyketon-Photoinitiator umfasst.

**7.** Ultravioletthärtbare Transferbeschichtung nach Anspruch 6, wobei der $\alpha$-Hydroxyketon-Photoinitiator 1-Hydroxycyclohexylphenylketon ist.

**8.** Ultravioletthärtbare Transferbeschichtung nach einem der Ansprüche 1 bis 7, wobei das Acrylat-Monomer 1,6-Hexandioldiacrylat umfasst.

9. Leitfähige Folie oder leitfähiger Film, umfassend:

ein Substrat mit einer ersten Oberfläche und einer zweiten Oberfläche;
eine ultravioletthärtbare Transferbeschichtung nach einem der Ansprüche 1 bis 8, welche an der ersten Oberfläche haftet; und
eine leitfähige Beschichtung benachbart zu der ultravioletthärtbaren Transferbeschichtung, wobei die leitfähige Beschichtung nanometergroße Metallpartikel aufweist, welche in einem Netzwerk angeordnet sind, und wobei die leitfähige Beschichtung einen Oberflächenwiderstand von weniger oder gleich 0,1 Ohm/sq aufweist;
wobei die Folie oder der Film eine Bleistifthärte von größer oder gleich H aufweist, gemessen nach ASTM D3363 unter Verwendung eines Bleistifts "Mitsubishi Uni" mit einer Last von 1 kg, und wobei die Folie oder der Film eine Trübung von weniger oder gleich 6 % aufweist, gemessen nach ASTM D1003, Methode A, unter Verwendung eines CIE-Standard-Beleuchtungsmittels C.

10. Leitfähige Folie oder leitfähiger Film nach Anspruch 9, wobei das Substrat ein Polycarbonat, ein Poly(methylmethacrylat) (PMMA), ein Glas oder eine Kombination von mindestens einem der Vorstehenden umfasst.

11. Leitfähige Folie oder leitfähiger Film nach einem der Ansprüche 9 bis 10, wobei die Folie oder der Film eine Transmission von größer oder gleich 70 % des einfallenden Lichts mit einer Frequenz von 430 THz bis 790 THz aufweist, gemessen nach ASTM D1003, Methode A, unter Verwendung eines CIE-Standard-Beleuchtungsmittels C.

12. Leitfähige Folie oder leitfähiger Film nach einem der Ansprüche 9 bis 11, wobei die Folie oder der Film eine Transmission von größer oder gleich 80 % aufweist, gemessen nach ASTM D1003, Methode A, unter Verwendung eines CIE-Standard-Beleuchtungsmittels C, und wobei die Folie oder der Film eine Oberflächenwiderstandsänderung von weniger oder gleich 4 Ohm nach zweistündigem Kochen in Wasser aufweist, gemessen nach ASTM D257.

13. Verfahren zur Herstellung eines leitfähigen Substrats, umfassend:

Aufbringen einer ultravioletthärtbaren Transferbeschichtung nach einem der Ansprüche 1 bis 8 auf eine erste Oberfläche eines Empfängersubstrats oder auf eine erste Oberfläche eines Donorsubstrats, wobei die erste Oberfläche des Donorsubstrats eine an sie gekoppelte leitfähige Beschichtung aufweist;
Zusammenpressen der ersten Oberfläche des Empfängersubstrats und der ersten Oberfläche des Donorsubstrats, um einen Stapel zu bilden, wobei die ultravioletthärtbare Transferbeschichtung dazwischen angeordnet ist;
Erwärmen des Stapels;
Aktivieren der ultravioletthärtbaren Transferbeschichtung mit einer Ultraviolettstrahlungsquelle;
Entfernen des Donorsubstrats von dem Stapel, so dass ein leitfähiges Substrat zurückbleibt; wobei die ultravioletthärtbare Transferbeschichtung an der ersten Oberfläche des Empfängersubstrats und an der leitfähigen Beschichtung haften bleibt;
wobei das Erwärmen ferner ein Erwärmen auf mehr als 70 °C umfasst.

14. Verfahren nach Anspruch 13, umfassend ein Anwenden eines Schutzmaterials auf eine Oberfläche des leitfähigen Substrats und umfassend ein Trimmen des leitfähigen Substrats.

15. Verfahren nach einem der Ansprüche 13 bis 14, wobei das Pressen umfasst: Rollenpressen, Bandpressen, Doppelbandpressen, Prägen, Gesenkpressen oder eine Kombination von mindestens einem der Vorstehenden.

## Revendications

1. Revêtement de transfert durcissable aux ultraviolets comprenant :

un oligomère d’acrylate multifonctionnel ; et
un monomère d’acrylate ;
lequel revêtement de transfert durcissable aux ultraviolets comprend un poids total, dans lequel 30 % à 80 % du poids total comprennent l’oligomère d’acrylate multifonctionnel, et dans lequel 15 % à 65 % du poids total comprennent le monomère d’acrylate ;

lequel revêtement de transfert durcissable aux ultraviolets peut adhérer à un substrat en polycarbonate avec une force d'adhérence supérieure ou égale à 3B telle que mesurée conformément à la norme ASTM D3359.

**2.** Revêtement de transfert durcissable aux ultraviolets selon la revendication 1, comprenant en outre
un photoamorceur ;
dans lequel 3 % à 7 % du poids total comprennent le photoamorceur ;
lequel revêtement de transfert durcissable aux ultraviolets peut adhérer à un substrat en polycarbonate avec une force d'adhérence supérieure ou égale à 3B telle que mesurée conformément à la norme ASTM D3359.

**3.** Revêtement de transfert durcissable aux ultraviolets selon l'une quelconque des revendications 1 et 2, dans lequel l'oligomère d'acrylate multifonctionnel comprend un oligomère d'acrylate d'uréthane aliphatique, un tétraacrylate de pentaérythritol, un acrylate d'uréthane aliphatique, un ester acrylate, un dexaacrylate de dipentaérythritol, une résine d'acrylate, du triacrylate de triméthylolpropane (TMPTA), un ester pentaacrylate de dipentaérythritol, ou une combinaison comprenant au moins l'un des précédents.

**4.** Revêtement de transfert durcissable aux ultraviolets selon l'une quelconque des revendications 1 à 3, dans lequel l'oligomère d'acrylate multifonctionnel comprend un oligomère d'acrylate d'uréthane aliphatique et un tétraacrylate de pentaérythritol, dans lequel l'oligomère d'acrylate multifonctionnel comprend un poids d'oligomère d'acrylate multifonctionnel, dans lequel 30 % à 50 % du poids d'oligomère d'acrylate multifonctionnel comprend l'oligomère d'acrylate d'uréthane aliphatique, et dans lequel 50 % à 70 % du poids d'oligomère d'acrylate multifonctionnel comprend le tétraacrylate de pentaérythritol.

**5.** Revêtement de transfert durcissable aux ultraviolets selon l'une quelconque des revendications 1 à 4, dans lequel l'oligomère d'acrylate multifonctionnel comprend une résine d'acrylate.

**6.** Revêtement de transfert durcissable aux ultraviolets selon l'une quelconque des revendications 1, 3 et 4, dans lequel le photoamorceur comprend un photoamorceur $\alpha$-hydroxycétone.

**7.** Revêtement de transfert durcissable aux ultraviolets selon la revendication 6, dans lequel le photoamorceur $\alpha$-hydroxycétone est la 1-hydroxycyclohexylphénylcétone.

**8.** Revêtement de transfert durcissable aux ultraviolets selon l'une quelconque des revendications 1 à 7, dans lequel le monomère d'acrylate comprend du diacrylate de 1,6-hexanediol.

**9.** Feuille ou film conducteur comprenant :

un substrat comprenant une première surface et une deuxième surface ;
un revêtement de transfert durcissable aux ultraviolets selon l'une quelconque des revendications 1 à 8 adhérant à la première surface ; et
un revêtement conducteur adjacent au revêtement de transfert durcissable aux ultraviolets, lequel revêtement conducteur comprend des particules métalliques de taille nanométrique agencées en réseau, et lequel revêtement conducteur a une résistance de surface inférieure ou égale à 0,1 ohm/carré ;
lequel film ou feuille a une dureté au crayon supérieure ou égale à H, telle que mesurée conformément à la norme ASTM D3363 par utilisation d'un crayon Mitsubishi Uni ayant une charge de 1 kilogramme, et lequel film ou feuille a un voile inférieur ou égal à 6 %, tel que mesuré conformément à la norme ASTM D1003, Procédure A, par utilisation d'un illuminant normalisé CIE C.

**10.** Feuille ou film conducteur selon la revendication 9, dans lequel le substrat comprend un polycarbonate, un poly(méthacrylate de méthyle) (PMMA), un verre, ou une combinaison comprenant au moins l'un des précédents.

**11.** Feuille ou film conducteur selon l'une quelconque des revendications 9 et 10, lequel film ou feuille a un coefficient de transmission supérieur ou égal à 70 % d'une lumière incidente ayant une fréquence de 430 THz à 790 THz, tel que mesuré conformément à la norme ASTM D1003, Procédure A, par utilisation d'un illuminant normalisé CIE C.

**12.** Feuille ou film conducteur selon l'une quelconque des revendications 9 à 11, lequel film ou feuille a un coefficient de transmission supérieur ou égal à 80 % tel que mesuré conformément à la norme ASTM D1003, Procédure A, par utilisation d'un illuminant normalisé CIE C, et lequel film ou feuille a un changement de la résistivité de surface inférieur ou égal à 4 ohm après ébullition dans de l'eau pendant 2 heures, tel que mesuré conformément à la norme

ASTM D257.

**13.** Méthode de fabrication d'un substrat conducteur, comprenant :

l'application d'un revêtement de transfert durcissable aux ultraviolets selon l'une quelconque des revendications 1 à 8 sur une première surface d'un substrat receveur ou sur une première surface d'un substrat donneur, la première surface du substrat donneur comprenant un revêtement conducteur couplé à celle-ci ;
le pressage ensemble de la première surface du substrat receveur et de la première surface du substrat donneur pour former un empilement, le revêtement de transfert durcissable aux ultraviolets étant disposé entre elles ;
le chauffage de l'empilement ;
l'activation du revêtement de transfert durcissable aux ultraviolets avec une source de rayonnement ultraviolet ;
le retrait du substrat donneur hors de l'empilement, ce qui laisse un substrat conducteur ; le revêtement de transfert durcissable aux ultraviolets restant adhéré à la première surface du substrat receveur et au revêtement conducteur ;
dans laquelle le chauffage comprend en outre un chauffage à plus de 70°C.

**14.** Méthode selon la revendication 13, comprenant l'application d'un matériau protecteur à une surface du substrat conducteur et comprenant le parage du substrat conducteur.

**15.** Méthode selon l'une quelconque des revendications 13 et 14, dans laquelle le pressage comprend un pressage au rouleau, un pressage sur bande, un pressage sur bande double, un estampage, un pressage sur matrice, ou une combinaison comprenant au moins l'un des précédents.

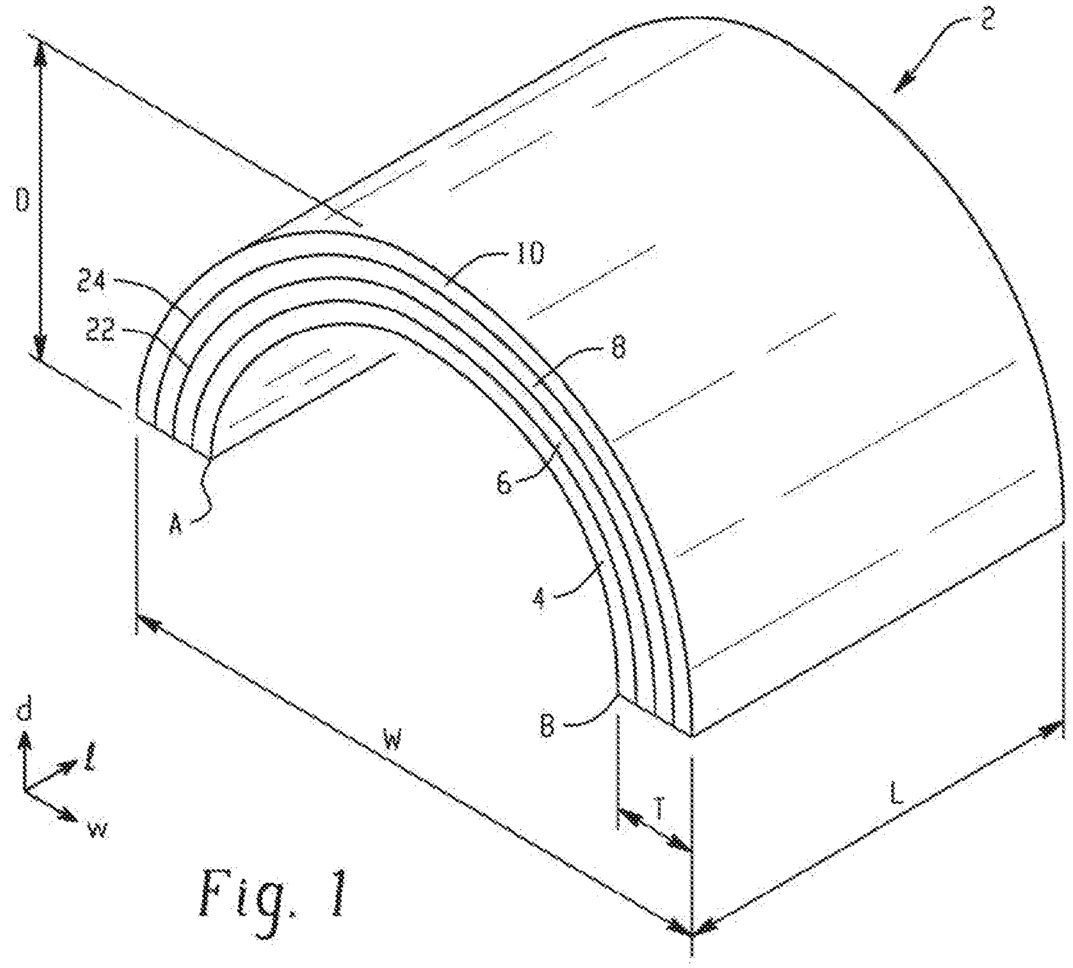


Fig. 1

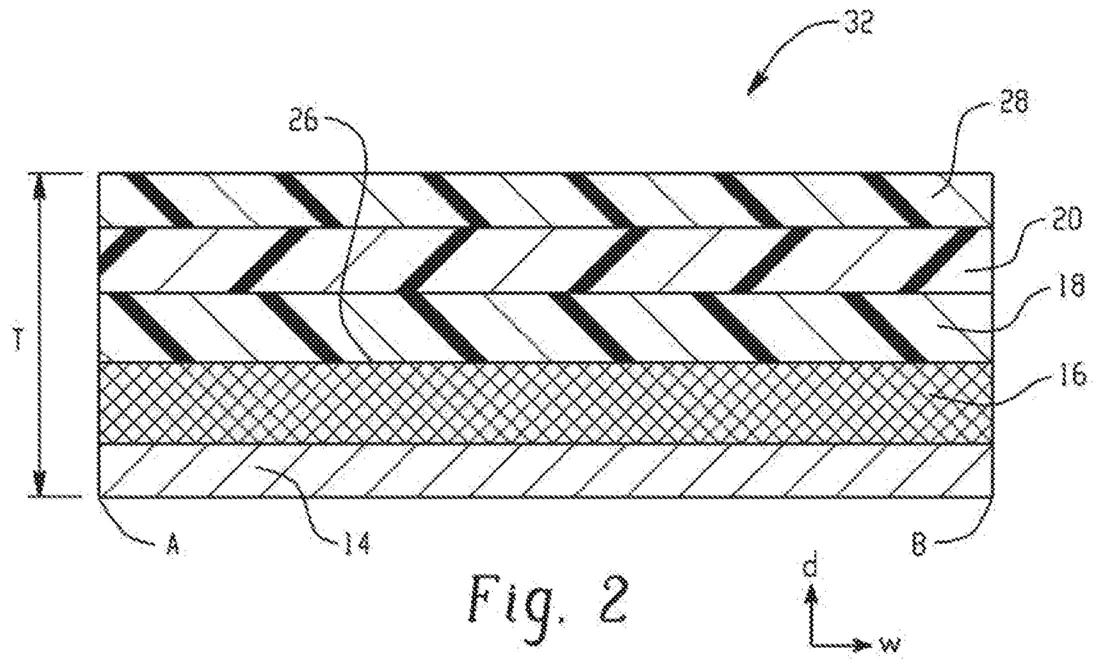


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1632019 A
- US 2013136874 A1
- US 2012098419 A1
- US 5476535 A